# EUROPÄISCHE PATENTANMELDUNG

(11) **EP 2 778 817 A1**
(43) Veröffentlichungstag der Anmeldung: **17.09.2014**
(21) Anmeldenummer: 13158713.1
(22) Anmeldetag: 12.03.2013
(51) Int. Cl.: G05B 23/02

(54) **Überwachung einer ersten Ausrüstung einer ersten technischen Anlage mittels Benchmark**

(71) Anmelder: Siemens Aktiengesellschaft, 80333 München (DE)
(72) Erfinder: Lehofer, Martin, 4050 Traun (AT); Winter, Günther, 91077 Neunkirchen/Brand (DE)

(57) **Zusammenfassung**

Die Erfindung betrifft ein Verfahren zum Überwachen einer ersten Ausrüstung (1) einer ersten technischen Anlage (2). Weiterhin betrifft die Erfindung eine Sortiereinheit, ein System, ein Computerprogramm und ein Computerprogrammprodukt zum Überwachen einer ersten Ausrüstung (1) einer ersten technischen Anlage (2). Um eine Überwachung der ersten Ausrüstung (1) selbst dann zu ermöglichen, wenn auf Grundlage lediglich von Zustandsdaten der ersten Ausrüstung (1) bisher keine Überwachung möglich ist, wird vorgeschlagen, dass ein erster Sensor (3) erste Zustandsdaten der ersten Ausrüstung (1) erfasst und ein weiterer Sensor (13) weitere Zustandsdaten einer weiteren Ausrüstung (11) einer weiteren technischen Anlage (12) erfasst, wobei die ersten Zustandsdaten und die weiteren Zustandsdaten an eine Sortiereinheit (4) übermittelt werden und wobei die ersten Zustandsdaten und die weiteren Zustandsdaten von der Sortiereinheit (4) zu einer Rangliste verarbeitet werden.

## Beschreibung

Die Erfindung betrifft ein Verfahren zum Überwachen einer ersten Ausrüstung einer ersten technischen Anlage. Weiterhin betrifft die Erfindung eine Sortiereinheit, ein System, ein Computerprogramm und ein Computerprogrammprodukt zum Überwachen einer ersten Ausrüstung einer ersten technischen Anlage.

Für bestimmte Bauteile bzw. Ausrüstungen von Industrieanlagen gibt es keine brauchbaren Methoden, um Ausfälle vorherzusagen oder zu bestimmen, wie lange ihr Betrieb noch möglich ist. Treten Veränderungen an einer Ausrüstung auf, wie z.B. Vibrationen oder Geräusche, werden unter Umständen Reparaturmaßnahmen durchgeführt. Der Erfolg dieser Reparaturmaßnahmen, beispielsweise in Form von reduzierten Vibrationen oder reduzierten Geräuschen, kann jedoch nicht objektiv beurteilt werden. In solchen Fällen kann eine zustandsbasierte Wartung durch eine Zustandsüberwachung ("Condition Monitoring") nicht betrieben werden, da keine Informationen zur Parametrierung bzw. Festlegung von Grenzen vorhanden sind.

Ausrüstungen, bei denen eine zustandsbasierte Überwachung bzw. Wartung auf Grundlage lediglich von Daten der zu überwachenden Ausrüstung bisher nicht möglich ist, sind beispielsweise im Umfeld von Walzstraßen mit Walzgerüsten anzutreffen. Derartige Anlagen können dabei viele, jeweils verschleißbehaftete Einzelteile und insgesamt einen komplexen Aufbau aufweisen, so dass der Ansatz einer zustandsbasierten Überwachung beispielsweise eines Walzgerüsts mit einer großen Anzahl von physikalischen Observablen einhergeht. Daher kann es unter Umständen nicht möglich sein, einen eindeutigen Zusammenhang zwischen den Observablen und dem Zustand, beispielsweise des Walzgerüsts, abzuleiten.

Bei derartigen Bauteilen bzw. Ausrüstungen erfolgt die Wartung daher präventiv, beispielsweise nach einer bestimmten Laufzeit oder nach einer bestimmten produzierten Materialmenge, oder auf Verdacht, z.B. bei ungewöhnlichem Verhalten, wie Vibrationen oder Geräuschen.

Aus US 6 643 801 B1 ist ein Verfahren zur Abschätzung einer Zeit bis zu einem nächsten Maschinenfehler bekannt, welche auf einer Datenbank beruht, in welche Fehlerdaten mehrerer Maschinen und Reparaturdaten dieser Maschinen eingetragen werden.

Der Erfindung liegt die Aufgabe zugrunde, eine Überwachung der ersten Ausrüstung selbst dann zu ermöglichen, wenn auf Grundlage lediglich von Zustandsdaten der ersten Ausrüstung bisher keine Überwachung möglich ist.

Diese Aufgabe wird durch ein Verfahren zum Überwachen einer ersten Ausrüstung einer ersten technischen Anlage gelöst, wobei ein erster Sensor erste Zustandsdaten der ersten Ausrüstung erfasst und ein weiterer Sensor weitere Zustandsdaten einer weiteren Ausrüstung einer weiteren technischen Anlage erfasst, wobei die ersten Zustandsdaten und die weiteren Zustandsdaten an eine Sortiereinheit übermittelt werden und wobei die ersten Zustandsdaten und die weiteren Zustandsdaten von der Sortiereinheit zu einer Rangliste verarbeitet werden.

Weiterhin wird diese Aufgabe durch eine Sortiereinheit zum Überwachen einer ersten Ausrüstung einer ersten technischen Anlage gelöst, wobei die Sortiereinheit Empfangsmittel zum Empfangen von ersten Zustandsdaten der ersten Ausrüstung und von weiteren Zustandsdaten einer weiteren Ausrüstung einer weiteren technischen Anlage sowie eine Recheneinheit zum Verarbeiten der ersten Zustandsdaten und der weiteren Zustandsdaten zu einer Rangliste umfasst.

Ferner wird diese Aufgabe durch ein System zum Überwachen einer ersten Ausrüstung einer ersten technischen Anlage gelöst, wobei das System einen ersten Sensor zum Erfassen erster Zustandsdaten der ersten Ausrüstung, einen weiteren Sensor zum Erfassen weiterer Zustandsdaten einer weiteren Ausrüstung einer weiteren technischen Anlage und die erfindungsgemäße Sortiereinheit umfasst.

Schließlich wird diese Aufgabe auch durch ein Computerprogramm nach Anspruch 11 und ein Computerprogrammprodukt nach Anspruch 12 gelöst.

Zur Überwachung der ersten Ausrüstung sind ein erster Sensor, der erste Zustandsdaten der ersten Ausrüstung erfasst, sowie ein weiterer Sensor vorgesehen, der weitere Zustandsdaten einer weiteren Ausrüstung einer weiteren technischen Anlage erfasst. Dabei erfasst der jeweilige Sensor beispielsweise eine Temperatur, Vibrationen, Informationen zur Position und/oder Geschwindigkeit, Schmiermittelqualität oder -temperatur, optische Daten oder dergleichen bezüglich der jeweiligen Ausrüstung.

Die erfassten Zustandsdaten werden an eine Sortiereinheit übermittelt, welche daraus eine Rangliste erstellt. Dabei kann die Sortiereinheit, insbesondere in Form eines Computers oder einer sonstigen Recheneinheit, beispielsweise von einem externen Dienstleister betrieben werden und die Überwachung der ersten Ausrüstung bzw. der ersten Anlage als Dienstleistung dem Betreiber der jeweiligen Anlage angeboten werden. Beispielsweise können die ersten Zustandsdaten und/oder die weiteren Zustandsdaten kontinuierlich oder zyklisch übermittelt werden und/oder automatisch oder manuell übermittelt werden. Dabei können der erste Sensor und/oder der zweite Sensor zur Übermittlung der jeweiligen Zustandsdaten direkt mit der Sortiereinheit verbunden sein oder beispielsweise über ein paketorientiertes Netzwerk, wie zum Beispiel das Internet, ein privates Netzwerk oder ein virtuelles privates Netzwerk. Dabei kann zusätzlich zwischen dem jeweiligen Sensor und der Sortiereinheit eine Einheit zur Datenverarbeitung, welche beispielsweise eine Vorverarbeitung der jeweiligen Zustandsdaten vornimmt, vorgesehen sein. Insbesondere kann die Übermittlung der jeweiligen Zustandsdaten parallel für mehrere gleichartige oder ähnliche Ausrüstungen von mehreren technischen Anlagen mehrerer verschiedener Betreiber durchgeführt werden.

Die Sortiereinheit nimmt die übermittelten ersten Zustandsdaten und weiteren Zustandsdaten auf und nimmt eine beispielsweise kontinuierlich oder zyklisch eine Verarbeitung der erhaltenen Zustandsdaten vor, um die Rangliste zu erstellen.

Dabei bietet das erfindungsgemäße Verfahren besonders große Vorteile für eine erste Ausrüstung, für welche bisher keine Methode existiert, um insbesondere anhand der ersten Zustandsdaten zu beurteilen, wann ein Austausch bzw. eine Wartung der ersten Ausrüstung erforderlich ist oder wann ein Ausfall der ersten Ausrüstung zu erwarten ist. Denn erfindungsgemäß kann eine zustandsbasierte Überwachung bzw. Wartung auch für eine erste Ausrüstung erfolgen, für die bisher keine exakten Grenzwerte spezifiziert sind bzw für die bisher keine Methoden zur Ermittlung exakter Grenzwerte verfügbar sind. Insbesondere kann dadurch der Erfolg von Reparaturmaßnahmen besser beurteilt werden, denn nach einer erfolgten Reparatur der ersten Ausrüstung verändert sich die Position der ersten Ausrüstung in der Rangliste.

Dabei ist es nicht erforderlich, dass der Betreiber der ersten Ausrüstung dem Dienstleister direkten Zugriff auf sein System gewährt. Vielmehr kann der Betreiber der ersten Ausrüstung selbst festlegen, welche Daten weitergeleitet werden. Somit profitiert der Betreiber indirekt davon, dass sich andere Betreiber in Form eines "crowd-sourcing" bzw. einer Schwarmauslagerung an dem erfindungsgemäßen Verfahren beteiligen, ohne jedoch sensitive Geschäftsinformationen bekanntzugeben. Dabei kann der Dienstleister durch eine Verarbeitung und eine Speicherung der erhaltenen Daten Informationen sammeln, um daraus Grenzwerte abzuleiten und zu spezifizieren oder ein Verhalten der jeweiligen Ausrüstung zu identifizieren. Prinzipiell kann auch isoliert, d.h. ohne den Zugriff auf weitergehende Informationen anderer Betreiber, eine Zustandsüberwachung für die jeweilige Ausrüstung betrieben werden.

Da die Überwachung der ersten Ausrüstung auf Grundlage der ersten Zustandsdaten und der weiteren Zustandsdaten durchgeführt wird, kann hierbei davon gesprochen werden, dass ein Benchmark durchgeführt wird.

Bei einer vorteilhaften Ausgestaltung der Erfindung wird die Rangliste durch Vergleichen der ersten Zustandsdaten mit den weiteren Zustandsdaten erstellt.

Der Vergleich kann beispielsweise auf den absoluten Werten der ersten Zustandsdaten und der weiteren Zustandsdaten basieren. Beispielsweise können jeweils die betragsmäßig oder absolut größten Werte der jeweiligen Zustandsdaten betrachtet werden. Denkbar ist auch, dass "Ausreißer" ignoriert werden und lediglich die betragsmäßig oder absolut zweitgrößten oder drittgrößten Werte berücksichtigt werden.

Ebenso kann vorgesehen sein, dass der Vergleich auf zumindest einer statistisch oder stochastisch abgeleiteten Größe fußt, welche aus den ersten Zustandsdaten und den weiteren Zustandsdaten abgeleitet wird. Zu den derart abgeleiteten Größen gehören beispielsweise der arithmetische oder geometrische Mittelwert, der Median, die Standardabweichung und dergleichen.

Denkbar ist außerdem, dass auf Grundlage der ersten Zustandsdaten und der weiteren Zustandsdaten mathematische Funktionen zu deren Beschreibung abgeleitet werden, beispielsweise, indem eine lineare Regression oder ein Fit an eine mathematische Funktion vorgenommen wird. Dann könnte der Vergleich aufgrund von Parametern der jeweiligen mathematischen Funktion durchgeführt werden.

Bei einer vorteilhaften Ausgestaltung der Erfindung werden die Rangliste und/oder der Rang der ersten Zustandsdaten in der Rangliste an eine Datenverarbeitungseinheit der ersten Ausrüstung und/oder der ersten technischen Anlage übermittelt.

Insbesondere wenn die Sortiereinheit durch einen externen Dienstleister betrieben wird, kann es aus Gründen des Datenschutzes vorteilhaft sein, lediglich den Rang der ersten Zustandsdaten in der Rangliste an die Datenverarbeitungseinheit bzw. die erste technische Anlage zu übermitteln und somit dem Betreiber der ersten technischen Anlage verfügbar zu machen. Somit wird wiederum sichergestellt, dass kein unberechtigter Zugriff auf sensible Daten der jeweiligen technischen Anlage erfolgen kann, welche insbesondere von einem Wettbewerber betrieben werden kann.

Die übermittelte Rangliste bzw. der übermittelte Rang der ersten Zustandsdaten in der Rangliste erlaubt dabei der Datenverarbeitungseinheit bzw. der technischen Anlage, Maßnahmen zu ergreifen, um den Rang der ersten Ausrüstung in der Rangliste zu verbessern. Ziel der Verbesserung des Rangs ist dabei insbesondere, einen materiellen, finanziellen oder sonstigen Schaden bzw. einen Ausfall oder Stillstand der ersten Ausrüstung zu vermeiden. So kann beispielsweise bei einem ungünstigen Rang der ersten Zustandsdaten eine Wartung bzw. eine Inspektion der ersten Ausrüstung vorgesehen werden.

Weiterhin können der erste Sensor und/oder der zweite Sensor zur Übermittlung der jeweiligen Zustandsdaten zunächst mit der Datenverarbeitungseinheit verbunden sein, welche die jeweiligen Zustandsdaten, gegebenenfalls nach einer Vorverarbeitung der jeweiligen Zustandsdaten, an die Sortiereinheit übermitteln.

Die Datenverarbeitungseinheit kann beispielsweise als eine Steuerung der ersten Ausrüstung und/oder der ersten technischen Anlage ausgeführt sein. Denkbar ist ebenfalls, dass die Datenverarbeitungseinheit als Condition-Monitoring-System, IT-System bzw. Automatisierungssystem der ersten Ausrüstung und/oder der ersten technischen Anlage ausgeführt ist. Vorzugsweise handelt es sich bei dem Condition-Monitoring-System um ein integriertes Condition-Monitoring-System, welches in ein IT-System oder Automatisierungssystem integriert ist.

Bei einer vorteilhaften Ausgestaltung der Erfindung wird ein Bericht erstellt, falls die ersten Zustandsdaten in der Rangliste einen ungünstigeren Rang als die weiteren Zustandsdaten aufweisen.

Das Format des Berichts kann insbesondere an spezifische Ausgabemedien angepasst sein, zum Beispiel den Ausdruck auf Papier, die Anzeige auf einem Bildschirm eines PCs oder mobilen Geräts bzw. den Versand per Email oder via SMS und dergleichen. Auf den Bericht kann beispielsweise "remote" über ein Computernetzwerk zugegriffen werden, d.h. aus der Entfernung beispielsweise über das Internet und/oder unter Verwendung mobiler Geräte. Weiterhin kann der Bericht beispielsweise an eine für die erste Ausrüstung zuständige Person verschickt werden.

Das Erstellen des Berichts und insbesondere das Verschicken des Berichts erlauben somit, Maßnahmen zu ergreifen, um den Rang der ersten Ausrüstung in der Rangliste zu verbessern, womit wiederum Schaden abgewandt werden kann und ein Ausfall oder Stillstand der ersten Ausrüstung verhindert werden kann.

Bei einer vorteilhaften Ausgestaltung der Erfindung werden die ersten Zustandsdaten und/oder die weiteren Zustandsdaten vor der Übermittlung an die Sortiereinheit komprimiert.

Die Komprimierung kann beispielsweise durch Analysefunktionen, wie beispielsweise eine Fourieranalyse der jeweiligen Zustandsdaten, erreicht werden. Wird die Komprimierung dezentral in der jeweiligen technischen Anlage durchgeführt, wird damit eine rasche Übermittlung der jeweiligen Zustandsdaten an die Sortiereinheit ermöglicht, da das zu übertragende Datenvolumen durch die Komprimierung merklich reduziert werden kann. Beispielsweise kann die Komprimierung durch die oben genannte Datenverarbeitungseinheit der ersten Ausrüstung bzw. der ersten technischen Anlage durchgeführt werden.

Bei einer vorteilhaften Ausgestaltung der Erfindung werden die ersten Zustandsdaten, die ersten Zustandsdaten und die weiteren Zustandsdaten und/oder die Rangliste in einer Speichereinheit der Sortiereinheit gespeichert, wobei erste Reparaturdaten zu einer Reparatur der ersten Ausrüstung und/oder der ersten technischen Anlage und weitere Reparaturdaten zu einer Reparatur der weiteren Ausrüstung und/oder der weiteren technischen Anlage an die Sortiereinheit übermittelt werden und in der Speichereinheit der Sortiereinheit gespeichert werden, wobei die ersten Zustandsdaten, die ersten Zustandsdaten und die weiteren Zustandsdaten und/oder der Rang der jeweiligen Zustandsdaten mit den jeweiligen Reparaturdaten korreliert werden und anhand der Korrelation bestimmt wird, ob eine Reparatur der ersten Ausrüstung und/oder der ersten technischen Anlage erforderlich ist.

Die jeweiligen Reparaturdaten können beispielsweise Informationen zum Zeitpunkt der Durchführung der Reparatur der jeweiligen Ausrüstung bzw. Anlage umfassen und Informationen dazu, in welchem Umfang die Reparatur durchgeführt wurde. Hierzu kann beispielsweise zählen, dass aufgeführt wird, welches Teil der jeweiligen Ausrüstung ausgetauscht bzw. repariert wurde, wie stark das reparierte bzw. ausgetauschte Teil beschädigt bzw. verschlissen war oder dergleichen.

Dabei kann der Begriff der Reparatur und der Reparaturdaten auch weiter gefasst sein und Wartungs- und Instandsetzungsmaßnahmen der jeweiligen Ausrüstung umfassen. Die entsprechenden Reparaturdaten können insbesondere den Zeitpunkt der Durchführung der jeweiligen Maßnahmen und Informationen zum Verschleiß der jeweiligen Ausrüstung umfassen.

Die Korrelation kann insbesondere zwischen den ersten Zustandsdaten und den ersten Reparaturdaten bestimmt werden. Denkbar ist auch die Korrelation zwischen den ersten Zustandsdaten und den weiteren Zustandsdaten einerseits und den ersten Reparaturdaten und den weiteren Reparaturdaten andererseits zu bestimmen. Weiterhin ist eine Bestimmung der Korrelation zwischen dem Rang der jeweiligen Zustandsdaten und den jeweiligen Reparaturdaten möglich. Schließlich ist auch die Bestimmung einer Korrelation zwischen allen zuvor genannten Daten denkbar.

Werden Zustandsdaten für die Korrelation verwendet, so kann beispielsweise die Schmiermittelqualität oder -temperatur zusammen mit den Zeitintervallen zwischen zwei Reparaturmaßnahmen betrachtet werden. Die Korrelation kann insbesondere der Gestalt sein, dass ein Wert für die ersten Zustandsdaten in Form einer bestimmten Schmiermittelqualität oder -temperatur bzw. ein Rang der jeweiligen Zustandsdaten gefunden wird, bei welchem die jeweilige Ausrüstung bisher immer zuverlässig betrieben werden konnte. Mit Kenntnis der aktuellen ersten Zustandsdaten bzw. des Rangs der ersten Zustandsdaten in der Rangliste kann damit bestimmt werden, ob aktuell eine Reparatur der ersten Ausrüstung bzw. ersten Anlage erforderlich ist.

Besonders aussagekräftige und belastbare Ergebnisse lassen sich besonders dann erhalten, wenn eine größere Anzahl von ähnlichen oder gleichartigen Ausrüstungen bzw. Anlagen ihre Zustandsdaten zur Verfügung stellen und derart überwacht werden.

Bei einer vorteilhaften Ausgestaltung der Erfindung wird dabei anhand der in der Speichereinheit der Sortiereinheit gespeicherten Rangliste und Reparaturdaten ein Zustand der ersten Ausrüstung und/oder der ersten technischen Anlage identifiziert und/oder ein Grenzwert für die ersten Zustandsdaten ermittelt, ab welchem eine Reparatur der ersten Ausrüstung und/oder der ersten technischen Anlage erforderlich ist. Anhand der Korrelation kann insbesondere ein Grenzwert für die ersten Zustandsdaten ermittelt werden, für welchen in der Vergangenheit mehrmals oder immer die Durchführung einer Reparaturmaßnahme der ersten Ausrüstung oder einer mit der ersten Ausrüstung vergleichbaren Ausrüstung erforderlich war.

Die Korrelation kann auch zur Identifikation eines Zustandes der ersten Ausrüstung verwendet werden, welcher eine Reparatur der ersten Ausrüstung und/oder der ersten technischen Anlage erforderlich macht. Ein derartiger Zustand kann beispielsweise eine Unwucht eines rotierenden Teils, ein Lagerschaden oder eine unzureichende Schmiermittelqualität sein, welche dank der Korrelation erkannt und identifiziert werden kann.

Bei einer vorteilhaften Ausgestaltung der Erfindung wird dabei anhand der Korrelation bestimmt, wann eine Reparatur der ersten Ausrüstung und/oder der ersten technischen Anlage erforderlich ist.

Sollte aktuell noch keine Reparatur der ersten Ausrüstung erforderlich sein, so kann anhand der Korrelation beispielsweise ein Trend oder eine mathematische Funktion, welche das bisherige und ggf. das zukünftige Verhalten der ersten Ausrüstung beschreibt, ermittelt werden und eine beispielsweise mittels einer Interpolation Aussage über zu erwartende, zukünftige erste Zustandsdaten getroffen werden. Vergleicht man die zukünftigen ersten Zustandsdaten bzw. den Rang der ersten Zustandsdaten mit einem Wert, bei welchem die jeweilige Ausrüstung bisher immer zuverlässig betrieben werden konnte, so kann die verbleibende Zeit bis zur nächsten Reparatur der ersten Ausrüstung abgeschätzt werden bzw. der Zeitpunkt abgeschätzt werden, wann die nächste Reparatur der ersten Ausrüstung erforderlich ist. Hierzu können insbesondere die zukünftigen ersten Zustandsdaten bzw. der Rang der ersten Zustandsdaten mit dem oben genannten Grenzwert verglichen werden. Generell können bei der vorliegenden Erfindung auch mehrere Sensoren pro Ausrüstung vorgesehen werden. Auch können die erste technische Anlage und die weitere technische Anlage identisch sein und zwei oder mehr ähnliche oder gleichartige Ausrüstungen aufweisen, wobei jeweils zumindest ein Sensor die Zustandsdaten der jeweiligen Ausrüstung erfasst.

Die jeweilige Ausrüstung bzw. die jeweilige technische Anlage kann beispielsweise als Walzstraße, Walzgerüst oder Teil einer Walzstraße oder Walzgerüstes ausgeführt sein.

Im Folgenden wird die Erfindung anhand des in der Figur dargestellten Ausführungsbeispiels näher beschrieben und erläutert. Es zeigt:

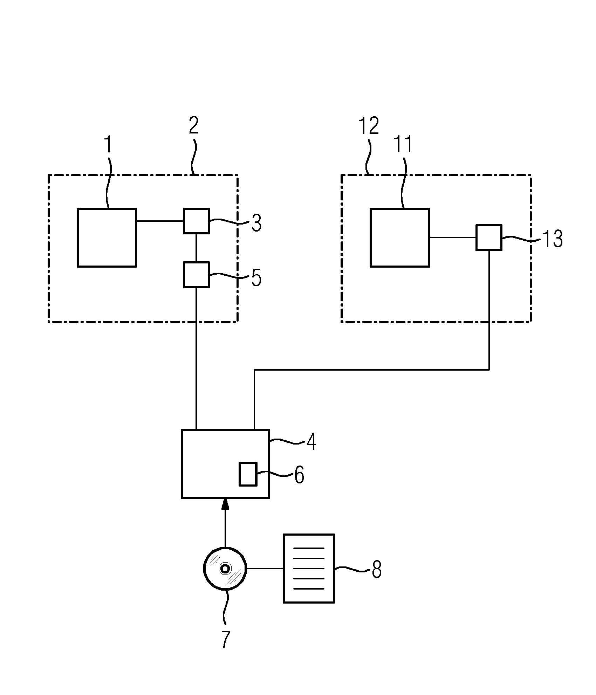

- FIG 1: ein Ausführungsbeispiel eines erfindungsgemäßen Systems zum Überwachen einer ersten Ausrüstung einer ersten technischen Anlage.

Figur 1 zeigt ein Ausführungsbeispiel eines erfindungsgemäßen Systems zum Überwachen einer ersten Ausrüstung 1 einer ersten technischen Anlage 2. Die erste technische Anlage 2 weist dabei einen ersten Sensor 3 auf, welcher erste Zustandsdaten der ersten Ausrüstung 1 erfasst. Weiterhin ist eine weitere technische Anlage 12 mit einer weiteren Ausrüstung 11 und einem weiteren Sensor 13 zur Erfassung weiterer Zustandsdaten der weiteren Ausrüstung 11 vorgesehen.

Die erste technische Anlage 2 weist weiterhin eine Datenverarbeitungseinheit 5 für die erste Ausrüstung 1 auf, wobei der erste Sensor 3 mit der Datenverarbeitungseinheit 5 verbunden ist. Die Datenverarbeitungseinheit 5 kann beispielsweise als integriertes Condition-Monitoring-System ausgeführt sein, welches eine Vorverarbeitung der ersten Zustandsdaten durchführt, beispielsweise in Form einer Komprimierung. Die Datenverarbeitungseinheit 5 ist mit einer Sortiereinheit 4 verbunden, an welche sie die gegebenenfalls vorverarbeiteten ersten Zustandsdaten übermittelt. Alternativ kann der erste Sensor 3 auch direkt mit der Sortiereinheit 4 verbunden sein. Auch eine Verbindung der Datenverarbeitungseinheit 5 mit der ersten Ausrüstung 1 kann vorgesehen sein.

Zur Übermittlung der weiteren Zustandsdaten ist der weitere Sensor 13 mit der Sortiereinheit 4 verbunden, wobei alternativ auch die weitere technische Anlage 12 eine weitere Datenverarbeitungseinheit aufweisen kann, die sowohl mit dem weiteren Sensor 13 als auch der Sortiereinheit 4 verbunden ist.

Die Verbindung zur Übermittlung der jeweiligen Zustandsdaten an die Sortiereinheit 4 kann dabei kabellos, beispielsweise über Funk oder WLAN, oder kabelgebundenen ausgeführt sein, beispielsweise optisch, über LAN, das Internet oder ein privates Netzwerk. Dabei verarbeitet die Sortiereinheit 4 die ersten Zustandsdaten und die weiteren Zustandsdaten zu einer Rangliste. Die jeweiligen Zustandsdaten können dabei insbesondere in der jeweiligen technischen Anlage komprimiert werden, bevor sie an die Sortiereinheit 4 übermittelt werden. Die Komprimierung der ersten Zustandsdaten kann beispielsweise durch die Datenverarbeitungseinheit 5 durchgeführt werden.

Die Sortiereinheit 4 weist eine Speichereinheit 6 auf, in welche beispielsweise die ersten Zustandsdaten, die weiteren Zustandsdaten und/oder die Rangliste gespeichert werden können. Zur Verarbeitung der Zustandsdaten zu einer Rangliste führt die Sortiereinheit 4 ein Computerprogramm 8 durch, welches auf einem Computerprogrammprodukt 7, wie beispielsweise einer CD oder einem USB-Stick, gespeichert ist und welches von der Sortiereinheit 4 eingelesen wird.

Weiterhin kann die Sortiereinheit 4 Empfangsmittel (nicht dargestellt) zum Empfangen der ersten Zustandsdaten und der weiteren Zustandsdaten sowie eine Recheneinheit (nicht dargestellt) zum Verarbeiten der ersten Zustandsdaten und der weiteren Zustandsdaten zu einer Rangliste umfassen. Insbesondere kann die Sortiereinheit 4 die Rangliste und/oder den Rang der ersten Zustandsdaten in der Rangliste an die Datenverarbeitungseinheit 5 übermitteln.

Zusammenfassend betrifft die Erfindung ein Verfahren zum Überwachen einer ersten Ausrüstung einer ersten technischen Anlage. Weiterhin betrifft die Erfindung eine Sortiereinheit, ein System, ein Computerprogramm und ein Computerprogrammprodukt zum Überwachen einer ersten Ausrüstung einer ersten technischen Anlage gelöst. Um eine Überwachung der ersten Ausrüstung selbst dann zu ermöglichen, wenn auf Grundlage lediglich von Zustandsdaten der ersten Ausrüstung bisher keine Überwachung möglich ist, wird vorgeschlagen, dass ein erster Sensor erste Zustandsdaten der ersten Ausrüstung erfasst und ein weiterer Sensor weitere Zustandsdaten einer weiteren Ausrüstung einer weiteren technischen Anlage erfasst, wobei die ersten Zustandsdaten und die weiteren Zustandsdaten an eine Sortiereinheit übermittelt werden und wobei die ersten Zustandsdaten und die weiteren Zustandsdaten von der Sortiereinheit zu einer Rangliste verarbeitet werden.

## Patentansprüche

1. Verfahren zum Überwachen einer ersten Ausrüstung (1) einer ersten technischen Anlage (2),
- wobei ein erster Sensor (3) erste Zustandsdaten der ersten Ausrüstung (1) erfasst und ein weiterer Sensor (13) weitere Zustandsdaten einer weiteren Ausrüstung (11) einer weiteren technischen Anlage (12) erfasst,
- wobei die ersten Zustandsdaten und die weiteren Zustandsdaten an eine Sortiereinheit (4) übermittelt werden und
- wobei die ersten Zustandsdaten und die weiteren Zustandsdaten von der Sortiereinheit (4) zu einer Rangliste verarbeitet werden.

2. Verfahren nach Anspruch 1,
wobei die Rangliste durch Vergleichen der ersten Zustandsdaten mit den weiteren Zustandsdaten erstellt wird.

3. Verfahren nach einem der vorhergehenden Ansprüche,
wobei die Rangliste und/oder der Rang der ersten Zustandsdaten in der Rangliste an eine Datenverarbeitungseinheit (5) der ersten Ausrüstung (1) und/oder der ersten technischen Anlage (2) übermittelt werden.

4. Verfahren nach einem der vorhergehenden Ansprüche,
wobei ein Bericht erstellt wird, falls die ersten Zustandsdaten in der Rangliste einen ungünstigeren Rang als die weiteren Zustandsdaten aufweisen.

5. Verfahren nach einem der vorhergehenden Ansprüche,
wobei die ersten Zustandsdaten und/oder die weiteren Zustandsdaten vor der Übermittlung an die Sortiereinheit (4) komprimiert werden.

6. Verfahren nach einem der vorhergehenden Ansprüche,
wobei die ersten Zustandsdaten, die ersten Zustandsdaten und die weiteren Zustandsdaten und/oder die Rangliste in einer Speichereinheit (6) der Sortiereinheit (4) gespeichert werden,
wobei erste Reparaturdaten zu einer Reparatur der ersten Ausrüstung (1) und/oder der ersten technischen Anlage (2) und weitere Reparaturdaten zu einer Reparatur der weiteren Ausrüstung (11) und/oder der weiteren technischen Anlage (12) an die Sortiereinheit (4) übermittelt werden und in der Speichereinheit (6) der Sortiereinheit (4) gespeichert werden, wobei die ersten Zustandsdaten, die ersten Zustandsdaten und die weiteren Zustandsdaten und/oder der Rang der jeweiligen Zustandsdaten mit den jeweiligen Reparaturdaten korreliert werden und anhand der Korrelation bestimmt wird, ob eine Reparatur der ersten Ausrüstung (1) und/oder der ersten technischen Anlage (2) erforderlich ist.

7. Verfahren nach Anspruch 6,
wobei anhand der in der Speichereinheit (6) der Sortiereinheit (4) gespeicherten Rangliste und Reparaturdaten ein Zustand der ersten Ausrüstung (1) und/oder der ersten technischen Anlage (2) identifiziert wird und/oder ein Grenzwert für die ersten Zustandsdaten ermittelt wird, ab welchem eine Reparatur der ersten Ausrüstung (1) und/oder der ersten technischen Anlage (2) erforderlich ist.

8. Verfahren nach einem der Ansprüche 6 oder 7,
wobei anhand der Korrelation bestimmt wird, wann eine Reparatur der ersten Ausrüstung (1) und/oder der ersten technischen Anlage (2) erforderlich ist.

9. Sortiereinheit (4) zum Überwachen einer ersten Ausrüstung (1) einer ersten technischen Anlage (2), umfassend
- Empfangsmittel zum Empfangen von ersten Zustandsdaten der ersten Ausrüstung (1) und von weiteren Zustandsdaten einer weiteren Ausrüstung (11) einer weiteren technischen Anlage (12),
- einer Recheneinheit (7) zum Verarbeiten der ersten Zustandsdaten und der weiteren Zustandsdaten zu einer Rangliste.

10. System zum Überwachen einer ersten Ausrüstung (1) einer ersten technischen Anlage (2), umfassend
- einen ersten Sensor (3) zum Erfassen erster Zustandsdaten der ersten Ausrüstung (1),
- einen weiteren Sensor (13) zum Erfassen weiterer Zustandsdaten einer weiteren Ausrüstung (11) einer weiteren technischen Anlage (12) und
- eine Sortiereinheit (4) nach Anspruch 9.

11. Computerprogramm (8) zur Durchführung eines Verfahrens nach einem der Ansprüche 1 - 8 bei Ablauf in einer Sortiereinheit (4) nach Anspruch 9.

12. Computerprogrammprodukt (7), auf dem ein Computerprogramm (8) nach Anspruch 11 gespeichert ist.
